**Europäisches Patentamt**

**European Patent Office**

**Office européen des brevets**

(11) Veröffentlichungsnummer: **0 113 842**
**A2**

## (12) EUROPÄISCHE PATENTANMELDUNG

(21) Anmeldenummer: **83111983.9**

(22) Anmeldetag: **30.11.83**

(51) Int. Cl.³: **B 01 D 29/02, B 01 D 25/26**

(30) Priorität: **17.12.82 DE 3246770**

(43) Veröffentlichungstag der Anmeldung: **25.07.84**
**Patentblatt 84/30**

(84) Benannte Vertragsstaaten: **AT BE CH DE FR GB IT LI LU NL SE**

(71) Anmelder: **Eberhard Hoesch & Söhne GmbH & Co., Postfach 116, D-5160 Düren (DE)**

(72) Erfinder: **Schotten, Alfons, Rurstrasse 13, D-5160 Düren (DE)**

(74) Vertreter: **Langmaack, Jürgen et al, Patentanwälte Dipl.-Ing. Alfred Maxton Dipl.-Ing. Jürgen Langmaack Pferdmengesstrasse 50, D-5000 Köln 51 (DE)**

(54) **Plattenfilter in Schräganordnung.**

(57) Plattenfilter mit mehreren, in einem Gestell an Führungsträgern (2) abgestützten, durch eine Schließeinrichtung (5) zu einem Filterplattenpaket zusammenpreßbaren Filterplatten (7), wobei die auf das Filterplattenpaket (7) ausgeübten Schließkräfte durch Zuganker des Gestells aufgenommen werden, und mit zwischen je zwei Filterplatten angeordneten Rahmen (8), wobei jede Filterplatte (7) wenigstens auf einer Seite ihrer geschlossenen Trennwand mit Kannelierungen für den Flüssigkeitsablauf versehen ist, und mit bewegbarem Filterband (13), das über Umlenkrollen (11) jeweils zwischen Filterplatte (7) und Rahmen (8) hindurchgeführt ist, wobei jeweils an zwei gegenüberliegenden Rändern einer Filterplatle (7) eine Umlenkrolle (11) gelagert ist und wenigstens ein Teil der Umlenkrollen (11) auf einer Seite des Filterplattenpaketes mit einem Antriebsmittel verbunden ist. Die Zuganker (2) sind hierbei unter einem spitzen Winkel ($\alpha$) gegenüber der Vertikalen geneigt und die Filterplatten sind senkrecht zu den Zugankern (2) ausgerichtet angeordnet.

Bezeichnung:  Plattenfilter in Schräganordnung

Beschreibung:

Die Erfindung betrifft ein Plattenfilter mit mehreren, in einem Gestell an Führungsträgern abgestützten, durch eine Schließeinrichtung zu einem Filterplattenpaket zusammenpreßbaren Filterplatten, wobei die auf das Filterplattenpaket ausgeübten Schließkräfte durch Zuganker des Gestells aufgenommen werden, und mit zwischen je zwei Filterplatten angeordneten Rahmen, wobei jede Filterplatte wenigstens auf einer Seite ihrer geschlossenen Trennwand mit Kannelierungen für den Flüssigkeitsablauf versehen ist, und mit bewegbarem Filterband, das über Umlenkrollen jeweils zwischen Filterplatte und Rahmen hindurchgeführt ist, wobei jeweils an zwei gegenüberliegenden Rändern einer Filterplatte eine Umlenkrolle gelagert ist und wenigstens ein Teil der Umlenkrollen auf einer Seite des Filterplattenpaketes mit einem Antriebsmittel verbunden ist.

Ein Plattenfilter der eingangs bezeichneten Art ist beispielsweise aus der DE-PS 28 53 952 bekannt. Bei den bekannten Filtern dieser Art sind die einzelnen Filterplatten vertikal ausgerichtet, so daß nach Abschluß des Filtrationsvorganges und ggf. einer anschließenden Wäsche des Filterkuchens beim Öffnen des Filterplattenpaketes der Filterkuchen nach unten herausfallen kann. Der Filterkuchenaustrag erfolgt bei einer derartigen Filtervorrichtung unkontrolliert und hängt im wesentlichen von den Eigenschaften des Filterkuchens ab, d.h. seiner Festigkeit, der Haftung am Filterband etc.. In einer Reihe von Einsatzfällen neigt der Filterkuchen jedoch dazu, bereits während des Öffnungsvorganges sich von oben nach unten zusammenzuschieben, so daß der Filterkuchen sich zwischen den Filterplatten verkeilt und auch nicht mehr mit Hilfe des Filtertuches ausgetragen werden kann, da der Filterkuchen das Filtertuch gegen die daneben befindliche Filterplatte preßt. Außerdem wirkt das Gewicht des Kuchens als Zuglast am Filterband und es kann schon zu Bewegungen des Filterbandes kommen, bevor der beabsichtigte Antrieb des Filterbandes erfolgt. Ein weiterer Nachteil derartiger Filterpressen mit vertikal ausgerichteten Filterplatten ist dann zu verzeichnen, wenn der Filterkuchen nach Abschluß des Filtrationsvorganges noch gewaschen werden muß. Durch die vertikale Ausrichtung des Filterkuchens ergibt sich eine ungünstige Waschflüssigkeitsverteilung und eine entsprechend ungünstige Wascheffektivität.

Die vorstehend angegebenen Nachteile lassen sich bei einem Plattenfilter mit horizontal ausgerichteten Filterplatten vermeiden, wie sie beispielsweise aus der FR-PS 13 73 478 bekannt ist. Aber auch derartige Plattenfilter weisen eine Reihe von Nachteilen auf. Durch die horizontale Anordnung der Filterplatten ergibt sich eine erhebliche Verschmutzung bei Leckagen, da das Filtrat allseitig zwischen den einzelnen Filterplatten heraustreten kann. Ein weiterer Nachteil besteht darin, daß der Kuchenabwurf nach zwei Seiten erfolgt, so daß zu beiden Seiten des Plattenfilters entsprechende Transportmittel angeordnet werden müssen. Das Plattenfilter gemäß der vorstehend genannten Veröffentlichung weist gegenüber Plattenfiltern mit vertikal ausgerichteten Filterplatten noch den Nachteil auf, daß jeweils nur auf einer Fläche der Filterplatten ein Filtratabzug erfolgt, so daß hier pro Filterplatte nur die halbe Filterfläche gegenüber einem Plattenfilter mit vertikal ausgerichteten Filterplatten zur Verfügung steht.

Aus der DE-OS 24 21 781 ist ferner ein Plattenfilter mit horizontal angeordneten, beidseitig wirkenden Filterplatten vorbekannt. Mit Hilfe dieser vorbekannten Konstruktion ist zwar der Nachteil der geringen Filterfläche behoben. Da jedoch während des Filtrationsvorganges ein Teil des Filtrates jeweils nach oben abgezogen werden muß, ergibt sich trotz der vergrößerten Filterfläche nicht die an sich zu erwartende volle Filterleistung. Außerdem läßt sich das Restfiltrat oder Restwaschwasser, welches sich in der oberen Drainagefläche befindet, nicht ableiten, da die Ableitungskanäle höher liegen als die Trennfläche zwischen Platten und Rahmen, so daß diese Flüssigkeit beim Öffnen der Presse austritt und den Kuchen nachträglich wieder befeuchtet. Bei dieser Filterkonstruktion ist jedoch schon durch eine entsprechende Führung des Filterbandes und durch die Anordnung von Rahmen dafür Sorge getragen, daß der Kuchenabwurf nur nach einer Seite hin erfolgt. Der Austrag des Filterkuchens erfordert jedoch einen erheblichen Energieaufwand, da alle Filterkuchen gleichzeitig ausgetragen werden. Die Filterkuchen liegen mit ihrem vollen Gewicht auf dem Filterband, so daß mit dem Filterbandtransport insbesondere in der Anfahrphase erhebliche Reibungskräfte überwunden werden müssen. Da hierbei erhebliche Zugkräfte auf das Filterband einwirken, wird das Filterband selbst bei einem auf mehrere Umlenkrollen wirkenden Filterbandantrieb einer nachteiligen Dehnung unterworfen.

Der Erfindung liegt nun die Aufgabe zugrunde, die an Plattenfiltern mit vertikal ausgerichteten Filterplatten und auch die an Plattenfiltern mit horizontal ausgerichteten Filterplatten festgestellten Nachteile, insbesondere in bezug auf den Kuchenaustrag, die Filtratsammlung und Filtratableitung zu beseitigen.

Diese Aufgabe wird gemäß der Erfindung für ein Plattenfilter der eingangs bezeichneten Art dadurch gelöst, daß die Zuganker unter einem spitzen Winkel gegenüber der Vertikalen geneigt und Filterplatten senkrecht zu den Zugankern ausgerichtet im Pressengestell angeordnet sind. Eine derartige Anordnung führt in überraschender Weise zu einer Beseitigung der an Plattenfiltern mit vertikal und an Plattenfiltern mit horizontal ausgerichteten Filterplatten festgestellten Nachteile. Durch die geneigte Anordnung ergibt sich gegenüber vertikal ausgerichteten Filterplatten eine gute Waschflüssigkeitsverteilung im Filterkuchen und damit eine gute Wascheffektivität. Da nach dem Öffnen des Filterplattenpaketes der Kuchen auf dem Filterband aufliegt, erfolgt ein kontrollierter Kuchenaustrag, der erst mit dem Durchzug des Filterbandes einsetzt. Die Austragsgeschwindigkeit kann hierbei über die Antriebsgeschwindigkeit des Filterbandtransportes beeinflußt werden. Gegenüber Plattenfiltern mit horizontal ausgerichteten, beidseitig wirkenden Filterplatten ergibt sich der Vorteil, daß die Filtratsammlung und Filtratableitung aufgrund der Schräglage der Filterplatten auch von der oberen Filtratfläche gut abgeleitet werden kann. Die für Plattenfilter mit horizontalen Filterplatten gute Waschflüssigkeitsverteilung und Wascheffektivität bleibt jedoch trotz der Neigung der Filterplatten erhalten. Ein weiterer Vorteil der erfindungsgemäßen Konstruktion gegenüber Plattenfiltern mit horizontalen Filterplatten liegt in einem geringeren Energiebedarf für den Kuchenaustrag, da infolge der Neigung der Filterplatten das Gewicht des Filterkuchens den Bandtransport unterstützt. Infolge der Neigung ist außerdem die Verschmutzung durch Leckage gering, da zwischen den Filterplatten austretende Leckflüssigkeit nach einer Seite hin abläuft. Auch instabile Filterkuchen bereiten beim Austrag keinerlei Probleme, da ein Verkeilen zwischen den Filterplatten nicht eintreten kann.

In bevorzugter Ausgestaltung der Erfindung ist vorgesehen, daß der Neigungswinkel der Zuganker gegenüber der Vertikalen etwa 15° bis 20° beträgt. Ein derartiger Neigungswinkel ist etwas höher als der übliche Wert der Haftreibung zwischen Filterband und Filterplatte, so daß sich gegenüber einem Plattenfilter mit horizontal ausgerichteten Filterplatten eine spürbare Reduzierung des Energiebedarfs für den Filterbandtransport beim Kuchenaustrag ergibt. Andererseits ist die Reibung zwischen Filterkuchen und Filtertuch so groß, daß es trotz der Neigung der Filterplatten nicht zu einem unkontrollierten Filterkuchenaustrag kommt.

In weiterer vorteilhafter Ausgestaltung der Erfindung ist vorgesehen, daß die Schließeinrichtung oberhalb des Filterplattenpaketes am Gestell angeordnet ist. Dies hat den Vorteil, daß die Schließeinrichtung gegen Verschmutzung durch Leckflüssigkeit etc. geschützt ist. Ein weiterer Vorteil besteht darin, daß die Schließeinrichtung im Schließsinne durch das Gewicht des Kopfstückes und das Gewicht der Filterplatten selbst unterstützt wird.

Eine baulich besonders günstige Bauform ergibt sich, wenn man die Zuganker, die die kraftschlüssige Verbindung der beiden Endplatten (Kopf- und Endstück) bewirken, direkt als Schließzylinder ausbildet. Hierdurch wird die Bauhöhe auf den tatsächlich erforderlichen Raum für die geöffnete Presse beschränkt und man kann eine um vieles größerere Anzahl Filterplatten einsetzen und die zusätzliche Bauhöhe für einen überlangen Zylinder ist nicht erforderlich.

In Ausgestaltung der Erfindung ist ferner vorgesehen, daß die mit Bezug auf die Neigung der Filterplatten jeweils obenliegenden Umlenkrollen zumindest zum Teil mit dem Antriebsmittel verbunden sind. Auch hier ergibt sich gegenüber einem Plattenfilter mit horizontal ausgerichteten Filterplatten der Vorteil, daß die mit den Umlenkrollen verbundenen Antriebsmittel gegen Verschmutzung geschützt sind. Dies gilt insbesondere für einen Tuchtransport, bei dem alle Umlenkrollen mit Kettenrädern verbunden sind und über eine entsprechend zickzackförmig durchlaufende Antriebskette angetrieben werden.

Die Erfindung betrifft ferner eine bevorzugte Anordnung der erfindungsgemäßen Plattenfilter, die dadurch gekennzeichnet ist, daß mindestens zwei Plattenfilter vorgesehen sind, die gegeneinander geneigt angeordnet sind und bei der das Fördermittel zum Abtransport des Kuchens zwischen den beiden Plattenfiltern verläuft. Eine derartige Anordnung ergibt nicht nur eine Vereinfachung im Aufbau der Gestelle, da diese sich gegeneinander abstützen können, sondern führt auch zu einer besseren Raumausnutzung, da mit einem zentralen Fördermittel und einer zentralen Druckerzeugung für die Schließeinrichtungen beider Plattenfilter sowie einer zentralen Steuerung gearbeitet werden kann.

Die Erfindung wird anhand schematischer Zeichnungen eines Ausführungsbeispieles erläutert. Es zeigen:

Fig. 1     eine Seitenansicht eines geneigt angeordneten Plattenfilters,

Fig. 2     eine Ausführungsform mit als Schließeinrichtung ausgebildeten Zugankern,

Fig. 3     eine Anordnung von zwei gegeneinander geneigt ausgerichteten Plattenfiltern.

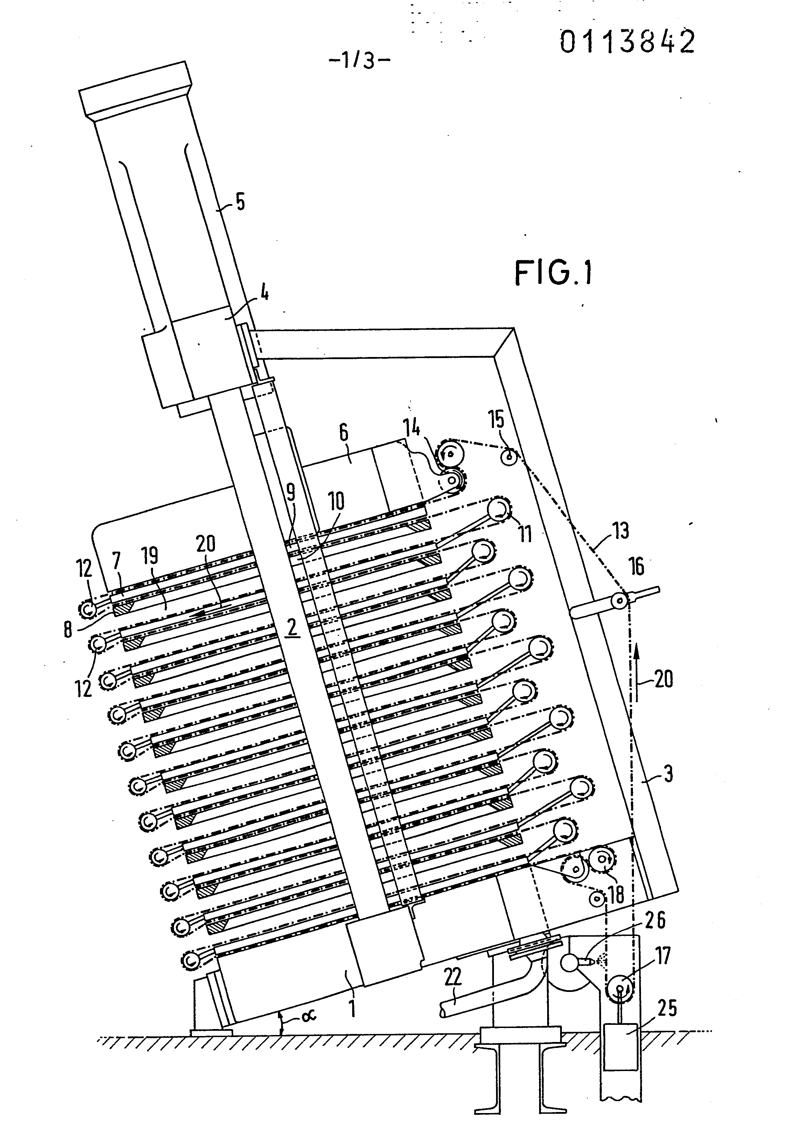

Wie die schematische Seitenansicht in Fig. 1 zeigt, ist ein Gestell vorgesehen, das eine starre Basisplatte 1 aufweist, die unter einem Winkel von beispielsweise $\alpha = 15°$ gegen-

7 0113842

über der Horizontalen geneigt ausgerichtet ist. Mit der Basisplatte 1 sind zu beiden Seiten Zuganker 2 und an der erhöhten Seite entsprechende Gestellholme 3 fest verbunden, die am oberen Gestellende in ein gemeinsames Querjoch 4 zusammengeführt sind. Am Querjoch 4 ist ein hydraulisch wirkender Schließzylinder 5 befestigt, dessen nicht sichtbare Kolbenstange mit der verschiebbaren Kopfplatte 6 in üblicher Weise verbunden ist.

Zwischen der Basisplatte 1 und der Kopfplatte 6 sind jeweils abwechselnd Filterplatten 7 und Rahmen 8 angeordnet, die sich über seitliche Führungsansätze 9, die als Gleitschuhe ausgebildet sind, auf den beiden parallelen, als Führungsträger dienenden Zugankern 2 abstützen. In der Zeichnung ist das Filterplattenpaket in geöffnetem Zustand dargestellt, wobei zum besseren Verständnis die Rahmen 8 jeweils geschnitten dargestellt sind.

An den Filterplatten 7 sind an zwei gegenüberliegenden Seiten jeweils Umlenkrollen 11 und 12 gelagert, wobei die "oben" liegenden Rollen 11 einen größeren Durchmesser aufweisen als die "unten" liegenden Rollen 12. Über diese Umlenkrollen 11 und 12 ist ein endloses Filterband 13 zickzackförmig durch das Filterplattenpaket geführt und zwar in der Weise, daß das Filterband 13 jeweils unmittelbar an der Oberseite und der Unterseite einer Filterplatte 7 vorbei und jeweils zwischen einer Filterplatte 7 und einem Rahmen 8 hindurchgeführt ist.

Das Filterband 13 ist auf der in bezug auf den Neigungswinkel obenliegenden Seite des Filterplattenpaketes über eine Antriebsstation 14, Führungsrollen 15 und eine Reguliereinrichtung 16 sowie eine mit einem Gewicht 25 belastete Spannrolle 17 um das Filterplattenpaket herumgeführt. Von der Spannrolle 17 läuft das Filterband 13 wieder über eine an der Basisplatte 1 gelagerte Antriebsstation 18 in das Filterplattenpaket ein.

Die Filterplatten 7 und die Rahmen 8 sind untereinander in an sich bekannter Weise über eine Hängevorrichtung, beispielsweise in Form einer Laschenkette verbunden, die so ausgebildet ist, daß der Zwischenraum zwischen einer Filterplatte 7 und dem darunterliegenden Rahmen 8 gerade so groß ist, daß das Filterband frei hindurchgezogen werden kann, während der Abstand zwischen einem Rahmen 8 und der ihrerseits darunterliegenden nächsten Filterplatte 7 grösser ist als die Rahmendicke, so daß der durch die Rahmendicke in seiner Höhe vorgegebene Filterkuchen 19 bei einer Bewegung des Filterbandes in Richtung des Pfeiles 20 zwischen Rahmen 8 und der darunterliegenden Filterplatte 7 frei -in bezug auf die Neigung des Plattenfilters- nach unten ausgetragen und auf ein nicht näher dargestelltes Fördermittel abgeworfen werden kann. Da nach dem Öffnen der Filterpresse infolge des Filterbanddurchzuges alle Filterkuchen gleichzeitig ausgeworfen werden, ergibt die geneigte Anordnung des Plattenfilters gegenüber waagerecht ausgerichteten Filterplatten eine bessere Verteilung des Filterkuchens, da beim Auswurf die Filterkuchen nicht aufeinanderfallen können, was beispielsweise bei trockenem Filterkuchen zu unangenehmer Staubentwicklung führen würde.

Die Filterplatten 7 können nun je nach der Aufgabenstellung unterschiedlich ausgebildet sein. So können sie beispielsweise nur auf ihrer obenliegenden Seite mit einer Kannelierung für den Filtratabzug versehen sein. Besonders vorteilhaft ist es jedoch, wenn die Filterplatten sowohl auf ihrer obenliegenden Seite als auch auf ihrer untenliegenden Seite mit einer Kannelierung für den Filtratabzug versehen sind, also doppelt wirkend ausgebildet sind, da hierdurch die zur Verfügung stehende Filterfläche verdoppelt wird. Die geneigte Anordnung ergibt gegenüber der bekannten horizontalen Ausrichtung der Filterplatten auch nach oben bereits in der Anfangsphase des Filtrationsvorganges einen guten Filtratabzug, da die zulaufende Trübe in der von je zwei benachbarten Filterplatten begrenzten Filterkammer einen Flüssigkeitsspiegel ausbildet, der beide Filterflächen, wenn auch mit geringfügigem Unterschied im Überdeckungsgrad, berührt.

Die geneigte Anordnung erlaubt auch die Verwendung von Membranplatten, so daß die Einrichtung als Plattenpreßfilter betrieben werden kann. Hierbei ist in bekannter Weise jede Filterplatte auf ihrer Unterseite mit einer topfförmigen Ausnehmung versehen, in der eine von der Rückseite her mit einem Druckmittel beaufschlagbare Preßmembran angeordnet ist. Diese Preßmembran kann, wie aus Plattenpreßfiltern mit vertikal ausgerichteten Filterplatten bekannt, ebenfalls auf ihrer dem Kuchen zugewandten Fläche mit einer Kannelierung für den Filtratabzug versehen sein, so daß auch in der Ausbildung als Plattenpreßfilter die vorteilhafte doppelseitige Filterwirkung, wie vorstehend beschrieben, ausgenutzt werden kann.

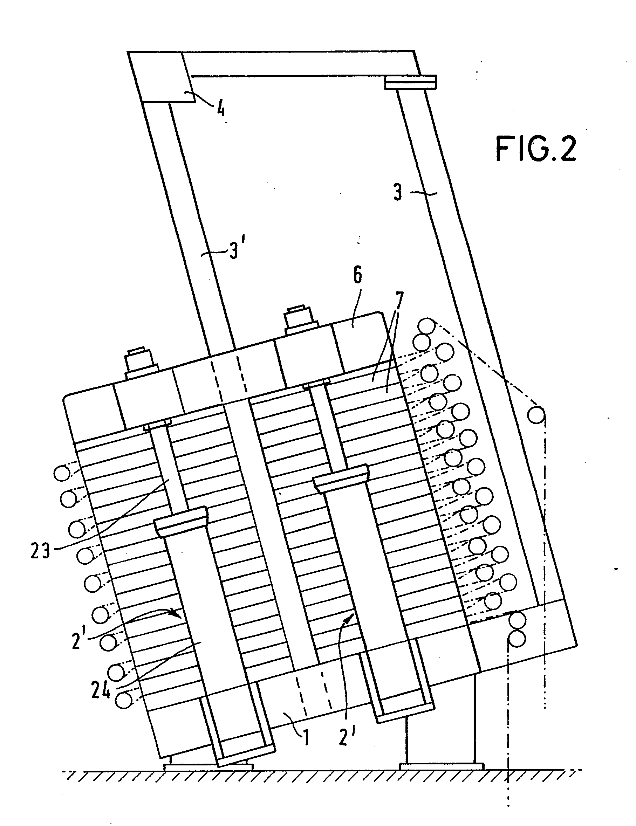

In Fig. 2 ist eine Ausführungsform dargestellt, bei der das Gestell im wesentlichen durch die starre Basisplatte 1 sowie den Gestellholmen 3, 3' und dem Querjoch 4 gebildet ist. Die zu beiden Seiten des Filterplattenpaketes verlaufenden Gestellholme 3' dienen hierbei gleichzeitig als Führungsträger für die Filterplatten 7 sowie die verschiebbare Kopfplatte 6.

Bei diesem Ausführungsbeispiel sind insgesamt vier Zuganker 2', d.h. also zwei Zuganker zu beiden Seiten des Filterplattenpaketes vorgesehen, die gleichzeitig Teil der Schließeinrichtung sind. Bei dem dargestellten Ausführungsbeispiel setzen sich die Zuganker 2' jeweils aus der mit der Kopfplatte 6 verbundenen Kolbenstange 23 und dem Zylinder 24 einer hydraulischen Kolben-Zylinder-Anordnung zusammen, so daß sich gegenüber der in Fig. 1 dargestellten Anordnung eine erhebliche Reduzierung der Bauhöhe ergibt.

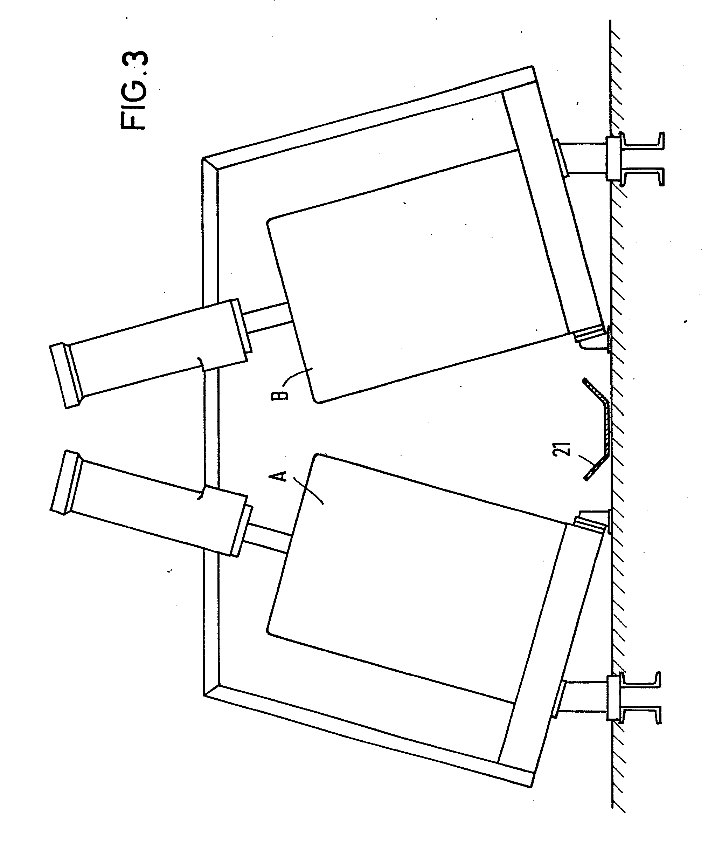

In Fig. 3 ist eine besonders vorteilhafte Anordnung eines geneigt ausgerichteten Plattenfilters dargestellt. Bei dieser Anordnung sind zwei Plattenfilter A und B gegeneinander geneigt aufgestellt. wobei die beiden Plattenfilter A und B sich gegenseitig abstützen. Im Auswurfbereich beider Plattenfilter A und B ist ein für beide Plattenfilter A und B gemeinsames Fördermittel, beispielsweise ein Förderband 21 angeordnet.

Der Trübezulauf erfolgt bei dem Ausführungsbeispiel in der bei Plattenfiltern üblichen Weise über einen durch Ausnehmungen in den Filterplatten bzw. Rahmen bei geschlossenem Filterplattenpaket sich über die ganze Länge des Filterplattenpaketes erstreckenden Trübekanal, in den im Bereich der Basisplatte ein Zulaufrohr 22 einmündet und von dem zu den Filterkammern, die durch die, durch die je zwei benachbarte Filterplatten 7 und einen zwischen diesen angeordneten Rahmen 8 gebildet werden, entsprechende Zuleitungskanäle abzweigen. Der Trübekanal liegt zweckmäßigerweise -bezogen auf die Neigung- im "oberen" Teil des Filterplattenpaketes. Der Filtratabzug erfolgt entsprechend über einen Filtratkanal -bezogen auf die Neigung- im "unteren" Teil des Filterplattenpaketes. Der Waschwasserzulauf, wenn für einen Anwendungsfall vorgesehen, erfolgt wie der Trübezulauf über einen durch Ausnehmungen in den Filterplatten und Rahmen gebildeten Kanal mit entsprechenden Abzweigungen zu den einzelnen Filterkammern. Auch der Waschwasserzulaufkanal liegt in bezug auf die Neigung "oben" im Filterplattenpaket.

Es ist natürlich auch möglich, sowohl die Zulauf- als auch die Ablaufkanäle der Filterrahmen bzw. -platten mit einzelnen beweglichen Schlauchanschlüssen zu versehen. Für die Ablaufkanäle ist es auch möglich, einfache Steckrohre in einen geschlitzten gemeinsamen Sammelkanal einzuleiten, der der Neigung der Presse angepaßt ist.

Im Bereich der Spannrolle 17 ist mit einer Vielzahl von Düsen versehenes, sich quer zum Filterband 13 erstreckendes Sprührohr 26 angeordnet, mit dessen Hilfe beim Durchzug des Filterbandes unter hohem Druck eine Waschflüssigkeit aufgespritzt und das Filterband gereinigt werden kann.

lg-ks

0113842

Bezeichnung: Plattenfilter in Schräganordnung

Ansprüche:

1. Plattenfilter mit mehreren, in einem Gestell an
Führungsträgern abgestützten, durch eine Schließeinrichtung zu einem Filterplattenpaket zusammenpreßbaren Filterplatten, wobei die auf das Filterplattenpaket ausgeübten Schließkräfte durch Zuganker des
Gestells aufgenommen werden, und mit zwischen je
zwei Filterplatten angeordneten Rahmen, wobei jede
Filterplatte wenigstens auf einer Seite ihrer geschlossenen Trennwand mit Kannelierungen für den Flüssigkeitsablauf versehen ist, und mit bewegbarem Filterband,
das über Umlenkrollen jeweils zwischen Filterplatte und
Rahmen hindurchgeführt ist, wobei jeweils an zwei gegenüberliegenden Rändern einer Filterplatte eine Umlenkrolle gelagert ist und wenigstens ein Teil der Umlenkrollen
auf einer Seite des Filterplattenpaketes mit einem Antriebsmittel verbunden ist, dadurch g e k e n n z e i c h-
n e t, daß die Zuganker (2) unter einem spitzen Winkel ($\alpha$)
gegenüber der Vertikalen geneigt und die Filterplatten
senkrecht zu den Zugankern ausgerichtet angeordnet sind.

Telefon: (02 21) 38 02 38 · Telegramm: Inventator Köln · Telex: 8 883 555 max d

0113842

2. Plattenfilter nach Anspruch 1, dadurch gekennzeichnet, daß der Neigungswinkel der Zuganker (2) gegenüber der Vertikalen etwa 15° bis 20° beträgt.

3. Plattenfilter nach Anspruch 1 oder 2, dadurch
gekennzeichnet, daß die Schließeinrichtung (5)
oberhalb des Filterplattenpaketes am Gestell angeordnet ist.

4. Plattenfilter nach Anspruch 1 oder 2, dadurch
gekennzeichnet, daß die Zuganker (2') als Schließeinrichtung ausgebildet sind.

5. Plattenfilter nach einem der Ansprüche 1 bis 4, dadurch gekennzeichnet, daß in bezug auf die Neigung
der Filterplatten (7) jeweils obenliegende Umlenkrollen (11) mit dem Antriebsmittel verbunden sind.

6. Anordnung von entsprechend den Ansprüchen 1 bis 5
ausgebildeten Plattenfiltern, dadurch gekennzeichnet,
daß mindestens zwei Plattenfilter (A, B) vorgesehen
sind, die gegeneinander geneigt angeordnet sind, und
daß ein Fördermittel (21) zum Abtransport des Filterkuchens zwischen den beiden Plattenfiltern (A, B) verläuft.

lg-ks

0113842

FIG.1

FIG.2

0113842

FIG.3

0113842